# EUROPEAN PATENT APPLICATION

(11) **EP 4 838 939 A1**
(43) Date of publication of application: **11.11.2026**
(21) Application number: 24919721.1
(22) Date of filing: 03.09.2024
(51) Int. Cl.: H04W 24/08

(54) **ENERGY CONSUMPTION MEASUREMENT METHOD AND DEVICE, AND STORAGE MEDIUM**

(30) Priority: 25.01.2024 CN 202410114562
(71) Applicant: ZTE Corporation, Shenzhen, Guangdong 518057 (CN)
(72) Inventor: TAN, Jie, Shenzhen, Guangdong 518057 (CN); GAO, Yuan, Shenzhen, Guangdong 518057 (CN); QIU, Zhihong, Shenzhen, Guangdong 518057 (CN); SHA, Xiubin, Shenzhen, Guangdong 518057 (CN)
(74) Representative: Ziebig Hengelhaupt Intellectual Property Attorneys Patentanwaltskanzlei PartGmbB
(86) International application number: PCT/CN2024/116617
(87) International publication number: WO 2025/156640

(57) **Abstract**

Embodiments of the present invention provide an energy consumption measurement method and device, and a storage medium. The energy consumption measurement method comprises: acquiring network energy consumption measurement configuration information; on the basis of the network energy consumption measurement configuration information, generating a network energy consumption measurement report; and sending the network energy consumption measurement report.

## Description

This application claims priority to Chinese Patent Application No. 202410114562.2, filed on January 25, 2024, which is incorporated herein by reference in its entirety.

### TECHNICAL FIELD

The present disclosure relates to the field of communication technologies, and in particular, to an energy consumption measurement method and device, and a storage medium.

### BACKGROUND

Currently, according to the regulations of operators, users may obtain information about network energy consumption from a network, so that users may control their network usage behaviors well, thereby saving energy.

### SUMMARY

In a first aspect, an energy consumption measurement method is provided and applied to a terminal. The energy consumption measurement method includes: acquiring network energy consumption measurement configuration information; generating, based on the network energy consumption measurement configuration information, a network energy consumption measurement report; and sending the network energy consumption measurement report.

In a second aspect, another energy consumption measurement method is provided and applied to a base station. The energy consumption measurement method includes: sending network energy consumption measurement configuration information to a terminal; and receiving a network energy consumption measurement report sent by the terminal. The network energy consumption measurement report is generated by the terminal based on the network energy consumption measurement configuration information.

In a third aspect, an energy consumption measurement device is provided. The energy consumption measurement device includes: a communication module configured to acquire network energy consumption measurement configuration information, and a processing module configured to generate a network energy consumption measurement report based on the network energy consumption measurement configuration information. The communication module is further configured to send the network energy consumption measurement report.

In a fourth aspect, another energy consumption measurement device is provided. The energy consumption measurement device includes: a sending module configured to send network energy consumption measurement configuration information to a terminal, and a receiving module configured to receive a network energy consumption measurement report sent by the terminal. The network energy consumption measurement report is generated by the terminal based on the network energy consumption measurement configuration information.

In a fifth aspect, yet another energy consumption measurement device is provided. The energy consumption measurement device includes a processor. The processor, upon executing a computer program, performs the energy consumption measurement method in the first aspect or the second aspect.

In a sixth aspect, a computer-readable storage medium is provided. The computer-readable storage medium includes computer instructions. The computer instructions, upon being executed, perform the energy consumption measurement method in the first aspect or the second aspect.

In a seventh aspect, a computer program product including instructions is provided. The computer program product, upon being run on a computer, enables the computer to perform the energy consumption measurement method in the first aspect or the second aspect.

### BRIEF DESCRIPTION OF THE DRAWINGS

In order to more clearly describe technical solutions in the present disclosure, the accompanying drawings to be used in some embodiments of the present disclosure will be introduced briefly below. However, the accompanying drawings to be described below are merely accompanying drawings of some embodiments of the present disclosure, and those of ordinary skill in the art may obtain other drawings according to these drawings.
FIG. 1 is a schematic diagram showing an architecture of a communication system, in accordance with embodiments of the present disclosure;
FIG. 2 is a flow chart of an energy consumption measurement method, in accordance with embodiments of the present disclosure;
FIG. 3 is a schematic diagram showing interaction of network energy consumption measurement configuration information, in accordance with embodiments of the present disclosure;
FIG. 4 is a schematic diagram showing interaction of a network energy consumption measurement report, in accordance with embodiments of the present disclosure;
FIG. 5 is a schematic diagram showing another interaction of a network energy consumption measurement report, in accordance with embodiments of the present disclosure;
FIG. 6 is a schematic diagram showing interaction of measurement capability information, in accordance with embodiments of the present disclosure;
FIG. 7 is a flow chart of another energy consumption measurement method, in accordance with embodiments of the present disclosure;
FIG. 8 is a schematic diagram showing interaction of a handover request message, in accordance with embodiments of the present disclosure;
FIG. 9 is a schematic diagram showing another interaction of a handover request message, in accordance with embodiments of the present disclosure;
FIG. 10 is a schematic diagram showing another interaction of network energy consumption measurement configuration information, in accordance with embodiments of the present disclosure;
FIG. 11 is a schematic diagram showing yet another interaction of network energy consumption measurement configuration information, in accordance with embodiments of the present disclosure;
FIG. 12 is a schematic diagram showing yet another interaction of network energy consumption measurement configuration information, in accordance with embodiments of the present disclosure;
FIG. 13 is a schematic diagram showing yet another interaction of network energy consumption measurement configuration information, in accordance with embodiments of the present disclosure;
FIG. 14 is a schematic diagram showing a structure of an energy consumption measurement device, in accordance with embodiments of the present disclosure;
FIG. 15 is a schematic diagram showing a structure of another energy consumption measurement device, in accordance with embodiments of the present disclosure; and
FIG. 16 is a schematic diagram showing a structure of yet another energy consumption measurement device, in accordance with embodiments of the present disclosure.

### DETAILED DESCRIPTION

The technical solutions in the embodiments of the present disclosure are clearly and completely described below with reference to the accompanying drawings in the embodiments of the present disclosure. However, the described embodiments are merely some, but not all, embodiments of the present disclosure. All other embodiments obtained based on the embodiments of the present disclosure by those of ordinary skill in the art without paying any creative effort will fall within the protection scope of the present disclosure.

In the description of the present disclosure, unless otherwise specified, the symbol "/" means "or", for example, "A/B" may mean A or B. Herein, "and/or" is merely an associated relationship for describing associated objects, which means that there may be three relationships, for example, "A and/or B" may mean: only A, A and B at the same time, and only B. In addition, the term such as "at least one" means one or more, and the term such as "a/the plurality of" means two or more. Expressions, such as "first" and "second", do not limit the number and execution order, and the expressions, such as "first" and "second", also do not necessarily limit different items.

It will be noted that in the present disclosure, the term such as "exemplary" or "for example" is used to represent examples, illustrations, or explanations. Any embodiment or design scheme described with "exemplary" or "for example" in the present disclosure is not necessarily to be construed as preferred or advantageous over other embodiments or design schemes. Rather, the use of the term such as "exemplary" or "for example" is intended to present related concepts in a detailed manner.

Current research on the network focuses more on how to meet user experience while improving network energy efficiency, mainly focusing on the interior of the network, resulting in users being unable to directly obtain information about network energy consumption from the network. In response to the regulations of operators, information about network energy consumption is required to be provided to users. However, before information about network energy consumption is provided to the users, how to perform energy consumption measurement on the network to obtain information about network energy consumption is an urgent problem to be solved. In other words, there is currently no technical solution for how to perform energy consumption measurement on the network to obtain information about network energy consumption.

On this basis, an energy consumption measurement method is provided in the present disclosure. A terminal can perform energy consumption measurement on a network based on network energy consumption measurement configuration information, and generate a network energy consumption measurement report based on an energy consumption measurement result, so as to facilitate monitoring and management of network energy consumption, thereby achieving the effect of saving energy.

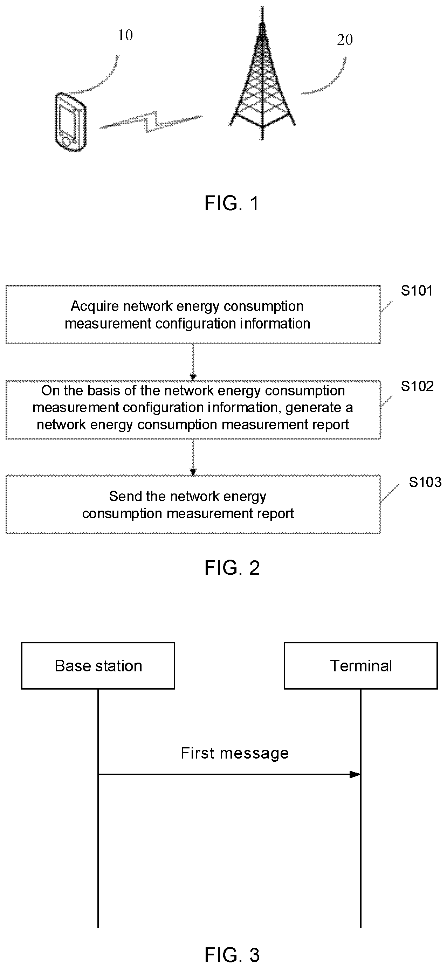

The energy consumption measurement method provided in the present disclosure may be applied to a communication system shown in FIG. 1. FIG. 1 is a schematic diagram showing an architecture of a communication system, in accordance with embodiments of the present disclosure. As shown in FIG. 1, the communication system includes a terminal 10 and a base station 20.

In some embodiments, the terminal 10 may include a device with wireless transceiving functions. The terminal 10 may be deployed on land (including an indoor or outdoor, handheld, wearable or vehicle-mounted scenario). The terminal 10 may also be deployed on water (e.g., on a ship). The terminal 10 may also be deployed in the air (e.g., on an airplane, on a balloon, or on a satellite). The terminal 10 may be a mobile phone, a pad, a computer with wireless transceiving functions, a virtual reality (VR) terminal, an augmented reality (AR) terminal, a wireless terminal in industrial control, a wireless terminal in self driving, a wireless terminal in a remote medical system, a wireless terminal in a smart grid, a wireless terminal in transportation safety, a wireless terminal in a smart city, a wireless terminal in a smart home, etc. The embodiments of the present disclosure do not limit the application scenarios. The terminal may sometimes also be referred to as a user, user equipment (UE), an access terminal, a UE unit, a UE station, a mobile station, a mobile platform, a remote station, a remote terminal, a mobile device, a UE terminal, a wireless communication device, a UE agent, or a UE device, etc., and the embodiments of the present disclosure are not limited thereto.

In some embodiments, the base station 20 may be a base station or an evolutional node B (eNB or eNodeB) in long term evolution (LTE) or long term evolution advanced (LTE-A), a base station in a 5G network, or a base station in a future communication system. The base station may include a variety of network-side devices such as a variety of macro base stations, micro base stations, home base stations, wireless remote devices, reconfigurable intelligent surfaces (RISs), routers, and wireless fidelity (Wi-Fi) devices.

It will be noted that, FIG. 1 is only an exemplary architecture diagram, and the number of devices and names of the various devices included in FIG. 1 are not limited, and in addition to the devices shown in FIG. 1, the communication system may further include other devices, such as a core network device.

The embodiments of the present disclosure do not limit the application scenarios. The system architectures and the service scenarios described in the embodiments of the present disclosure are intended to more clearly explain the technical solutions in the embodiments of the present disclosure, and do not constitute a limitation on the technical solutions provided in the embodiments of the present disclosure. Those of ordinary skill in the art will know that, with the evolution of network architectures and the emergence of new service scenarios, the technical solutions provided in the embodiments of the present disclosure are also applicable to similar technical problems.

FIG. 2 is a flow chart of an energy consumption measurement method, in accordance with the present disclosure. As shown in FIG. 2, the energy consumption measurement method is applied to a base station, and includes the following S101 to S103.

In S101, network energy consumption measurement configuration information is acquired.

In some embodiments, as shown in FIG. 3, the terminal receives a first message sent by the base station.

The first message includes the network energy consumption measurement configuration information. The first message includes at least one of: a radio resource control (RRC) protocol reconfiguration message or an RRC resume message. The network energy consumption measurement configuration information includes at least one of: network energy consumption measurement reference information, a service type, an area scope, a network slice identifier, a protocol data unit (PDU) session identifier, a Quality of Service (QoS) flow, a stand-alone non-public network (SNPN) identifier, a public land mobile network identifier, a core network area identifier, an energy consumption measurement priority, an energy consumption threshold for energy consumption measurement, a target functional entity address, a measurement interval for energy consumption measurement, a measurement type of energy consumption measurement, a transmission period for a network energy consumption measurement report, a transmission trigger indication for a network energy consumption measurement report, a real-time transmission indication for a network energy consumption measurement report, a periodic transmission indication for a network energy consumption measurement report, a start indication for energy consumption measurement, a measurement time for energy consumption measurement, a pause indication for energy consumption measurement, a pause transmission indication for a network energy consumption measurement report, a buffer quantity indication for a network energy consumption measurement report, a segmented transmission indication for a network energy consumption measurement report, a buffer threshold for a network energy consumption measurement report, or a buffer priority for a network energy consumption measurement report.

In some embodiments, the network energy consumption measurement reference information is a unique identifier for identifying network energy consumption measurement configuration information, and consists of a plurality of pieces of identification information. The network energy consumption measurement reference information includes at least one of: a mobile country code (MCC), a mobile network code (MNC), a tracking area code (TAC), a public land mobile network identity (PLMN ID), a next generation node B identity (gNB ID), a location area code (LAC), or an identifier (ID) of the network energy consumption measurement reference information. The identifier (ID) of the network energy consumption measurement reference information is used to distinguish its corresponding network energy consumption measurement reference information from other pieces of network energy consumption measurement reference information under the same conditions.

In this way, the corresponding network energy consumption measurement configuration information may be identified via the network energy consumption measurement reference information, thereby avoiding conflicts or confusion during reception.

In some embodiments, the service type is used to characterize a service type of the network to be measured. The service type includes at least one of: a dynamic adaptive streaming over HTTP (DASH) type, a multimedia telephony service for IMS (MTSI) type, a virtual reality (VR) type, an augmented reality (AR) type, an extended reality (XR) type, a data service type, a voice service type, an Internet of Things (IoT) service type, a real-time communication service type, or a location service type.

In this way, by using the service type carried in the network energy consumption measurement configuration information to distinguish different service types, it is possible to measure the energy consumption of the network to be measured in different service types, thereby improving the accuracy of energy consumption measurement.

In some embodiments, the area scope is used to characterize an area scope of the network to be measured. The area scope includes at least one of: a cell based area scope, a timing advance based (TA based) area scope, a tracking area identity based (TAI based) area scope, a public land mobile network area based (PLMN area based) area scope, a user plane positioning area based area scope, a user plane service area (UPSA) based area scope, or a preset marked area based area scope.

The preset marked area based area scope may be marked by means of longitude and latitude coordinates, geographic region identifiers, map coordinates, or the like.

For example, the preset marked area based area scope may be an area scope marked with a shape such as a circle, an ellipse, or a polygon. The preset marked area based area scope may be described via a shape type and a shape description. For example, the shape type may be indicated by 4 bits, and the shape types include: an ellipsoid point, an ellipsoid point with uncertainty circle, an ellipsoid point with uncertainty ellipse, a polygon, an ellipsoid point with altitude, an ellipsoid point with altitude and uncertainty ellipse, an elliptic arc, a high-accuracy ellipsoid point with uncertainty ellipse, a high-accuracy ellipsoid point with altitude and uncertainty ellipse, a high-accuracy ellipsoid point with scalable uncertainty ellipse, and a high-accuracy ellipsoid point with altitude and scalable uncertainty ellipse. The shape description may be described by means of longitude and latitude.

In this way, by using the area scope carried in the network energy consumption measurement configuration information to characterize the area scope of the network to be measured, it is possible to achieve energy consumption measurement for different area scopes and improve the accuracy of energy consumption measurement.

In some embodiments, slice information in the network to be measured is identified based on the network slice identifier carried in the network energy consumption measurement configuration information. The network slice identifier may include a single network slice selection assistance information (S-NSSAI) parameter or a network slice assistance information group ID (NSAG ID).

In some embodiments, the protocol data unit (PDU) session identifier (PDU session ID) includes a numeric identifier used to identify a PDU session in the network to be measured. For example, the PDU session ID (INTEGER (0..255)) means that the PDU session ID is an integer within a range of 0 to 255, inclusive.

In some embodiments, the QoS flow identifier is used to identify a QoS flow in the network to be measured. For example, the QoS flow identifier (INTEGER (0..63)) means that the QoS flow identifier is an integer within a range of 0 to 63, inclusive.

In some embodiments, the SNPN identifier may be a network identifier (NID) used to identify an SNPN in the network to be measured. The NID is completely independent of the PLMN ID.

In some embodiments, the public land mobile network identifier may be a content access gateway identifier (GAG ID) used to identify network access authorities of public network users and private network users in the network to be measured. The GAG ID is a special access identifier possessed by a public network integrated-non-public network (PNI-NPN) device.

In some embodiments, the core network area identifier is used to identify a core network area in the network to be measured. For example, the core network area identifier may include numbers, letters, symbols, or specific codes.

In some embodiments, the energy consumption measurement priority is used to characterize a priority or energy-saving level of the network energy consumption measurement configuration information. For example, the higher the energy consumption measurement priority, the higher the energy-saving requirement for the network to be measured, and the higher the transmission priority of the subsequent network energy consumption measurement report.

In this way, networks with high energy-saving levels may be measured first by using the energy consumption measurement priority carried in the network energy consumption measurement configuration information, so that the network energy consumption measurement reports of the corresponding networks may be obtained in time, thereby enabling timely configuration and management of the energy consumption of the networks.

In some embodiments, the energy consumption threshold for energy consumption measurement characterizes an upper limit set for energy consumption of the terminal or base station at a certain granularity, within a unit time, a specific time period, or a specific space. For example, energy consumed per unit time is measured in watts, and energy consumed within a specific time period or a specific space is measured in kilowatt-hours.

In some embodiments, the higher-layer entity address is used to characterize an address of a higher-layer entity that receives the network energy consumption measurement report. The higher-layer entity address may include an Internet Protocol (IP) address of the higher-layer entity.

In some embodiments, the measurement interval for energy consumption measurement is used to characterize the measurement interval when the terminal performs energy consumption measurement on the network to be measured. For example, the measurement interval for energy consumption measurement is 5 minutes, which means that the terminal performs one energy consumption measurement on the network to be measured every 5 minutes and generates a corresponding network energy consumption measurement report.

In some embodiments, the measurement type of energy consumption measurement is used to characterize a type of current energy consumption measurement and a type of the network energy consumption measurement report. The measurement type of energy consumption measurement includes at least one of: an energy consumption type, an energy efficiency type, a renewable energy type, or a carbon emission type. For example, in a case where the measurement type of energy consumption measurement includes the energy consumption type, the terminal, upon performing energy consumption measurement on the network to be measured, measures the energy consumption of the network to be measured and generates a network energy consumption measurement report related to energy consumption.

In some embodiments, the transmission period for the network energy consumption measurement report is used not only to indicate a period for transmitting the network energy consumption measurement report, but also to indicate a measurement period for energy consumption measurement. The network energy consumption measurement report is configured by the higher-layer entity.

In this way, by using the transmission period for the network energy consumption measurement report carried in the network energy consumption measurement configuration information, it is possible to periodically perform energy consumption measurement on the network to be measured and periodically report the corresponding network energy consumption measurement report, so as to facilitate the regular monitoring for network energy consumption and the analysis of long-term energy consumption trends.

In some embodiments, the transmission trigger indication for the network energy consumption measurement report is used to characterize a triggering event for transmitting the network energy consumption measurement report. The transmission trigger indication for the network energy consumption measurement report includes at least one of: an energy consumption threshold, an energy efficiency threshold, a renewable energy utilization rate threshold, or a carbon emission threshold.

For example, during energy consumption measurement, in response to a relevant value of energy consumption obtained by measurement reaching the energy consumption threshold, the corresponding network energy consumption measurement report is reported.

In this way, by using the transmission trigger indication for the network energy consumption measurement report carried in the network energy consumption measurement configuration information, it is possible to monitor the network energy consumption status in time. In response to the network energy consumption value reaching a set threshold, transmission of the network energy consumption measurement report is triggered, thereby timely identifying networks with abnormal energy consumption, ensuring the timeliness of monitoring, and achieving the effect of reducing network energy consumption.

In some embodiments, the real-time transmission indication for the network energy consumption measurement report is used to instruct the terminal to directly send the generated network energy consumption measurement report after the terminal completes one measurement within the measurement interval for energy consumption measurement.

In this way, by using the real-time transmission indication for the network energy consumption measurement report carried in the network energy consumption measurement configuration information, the terminal directly sends the network energy consumption measurement report after performing energy consumption measurement, so as to facilitate timely viewing of the network energy consumption status and improve the real-time performance of energy consumption monitoring.

In some embodiments, the periodic transmission indication for the network energy consumption measurement report is used to instruct the terminal to send the network energy consumption measurement report based on the transmission period for the network energy consumption measurement report. For example, after the terminal generates the network energy consumption measurement reports and stores the reports locally, upon expiration of the transmission period for the network energy consumption measurement report, the terminal sends the locally stored network energy consumption measurement reports in batches.

In this way, by using the periodic transmission indication for the network energy consumption measurement report carried in the network energy consumption measurement configuration information, a plurality of network energy consumption measurement reports are sent in batches in accordance with the transmission period, which facilitates data integration and analysis. By integrating and analyzing the plurality of network energy consumption measurement reports, it is possible to understand the energy consumption related status and change trends of the network well; moreover, the number of transmissions of the network energy consumption measurement reports may also be effectively reduced and the stability and reliability of transmission may be improved.

In some embodiments, the start indication for energy consumption measurement is used to instruct the terminal to start or resume energy consumption measurement.

In some embodiments, the measurement time for energy consumption measurement is used to indicate time information related to energy consumption measurement. The measurement time for energy consumption measurement includes at least one of: a start timestamp of energy consumption measurement, a stop timestamp of energy consumption measurement, a duration of energy consumption measurement, or a valid time of energy consumption measurement.

In this way, by using the measurement time for energy consumption measurement carried in the network energy consumption measurement configuration information, it is possible to determine a time range of energy consumption measurement and understand the corresponding energy consumption status of the network in different time periods, so as to accurately analyze the energy consumption status of the network and formulate corresponding energy-saving measures.

In some embodiments, the pause indication for energy consumption measurement is used to instruct the terminal to stop performing energy consumption measurement or to release the corresponding network energy consumption measurement configuration information.

In some embodiments, the pause transmission indication for the network energy consumption measurement report is used to instruct the terminal to stop transmitting the network energy consumption measurement report.

In some embodiments, the buffer quantity indication for the network energy consumption measurement report is used to indicate the maximum number of network energy consumption measurement reports that are able to be buffered.

In this way, by using the buffer quantity indication for the network energy consumption measurement report carried in the network energy consumption measurement configuration information, it is possible to adjust the transmission number of network energy consumption measurement reports when the terminal sends the network energy consumption measurement report, thereby improving the flexibility in the transmission of the network energy consumption measurement report and reducing transmission pressure.

In some embodiments, the segmented transmission indication for the network energy consumption measurement report is used to indicate whether the terminal supports segmented transmission of the network energy consumption measurement report.

In this way, by using the segmented transmission indication for the network energy consumption measurement report carried in the network energy consumption measurement configuration information, it may be determined whether the terminal supports segmented transmission of the network energy consumption measurement report. Furthermore, in a case where the terminal supports segmented transmission of the network energy consumption measurement report, the network energy consumption measurement report is sent in segments, thereby reducing the transmission burden and avoiding unnecessary consumption.

In some embodiments, the buffer threshold for the network energy consumption measurement report is used to indicate that the network energy consumption measurement report is stored or discarded in response to a corresponding measured value being greater than or less than a preset threshold.

In this way, the preset threshold may be set according to actual conditions, so as to determine whether the network energy consumption measurement report needs to be stored, thereby reducing the burden on storage space and well adapting to storage requirements under different conditions.

In some embodiments, the buffer priority for the network energy consumption measurement report is used to characterize a priority of the network energy consumption measurement report.

In this way, the importance of the network energy consumption measurement report may be determined based on the buffer priority for the network energy consumption measurement report carried in the network energy consumption measurement configuration information, and then the network energy consumption measurement reports are transmitted in sequence according to the importance of the network energy consumption measurement reports, to preferentially obtain the network energy consumption measurement report with high importance.

It will be noted that in a case where the network energy consumption measurement configuration information is directly configured by the higher-layer entity, the network energy consumption measurement report generated based on the network energy consumption measurement configuration information may be visible or invisible to the base station.

Regarding the visibility of the network energy consumption measurement report described above, in some embodiments, the network energy consumption measurement configuration information further includes at least one of: a radio access network (RAN) visible period of the network energy consumption measurement report, a RAN visible buffer quantity of the network energy consumption measurement report, a signaling radio bearer (SRB) indication, or an entity generating the network energy consumption measurement configuration information.

The RAN visible period of the network energy consumption measurement report is used to characterize a time interval during which the network energy consumption measurement report is visible to the base station. The RAN visible buffer quantity of the network energy consumption measurement report is used to characterize the number of network energy consumption measurement reports buffered by the terminal that are visible to the base station. The SRB indication is used to indicate an SRB type (e.g., SRB4 or SRB5) used by the base station to transmit the network energy consumption measurement report. The entity generating the network energy consumption measurement configuration information is used to characterize an entity (e.g., a mobile network (MN) or a service network (SN)) that configures the network energy consumption measurement configuration information.

In this way, by using the network energy consumption measurement configuration information, it is possible to flexibly control the quantity and period of the network energy consumption measurement reports visible to the base station, so as to facilitate management. Moreover, the SRB indication may be used to instruct the base station to use a specific SRB to transmit the network energy consumption measurement report, thereby improving the stability of transmission by the base station.

In S102, a network energy consumption measurement report is generated based on the network energy consumption measurement configuration information.

In some embodiments, the terminal performs energy consumption measurement and generates a network energy consumption measurement report based on the network energy consumption measurement configuration information.

For example, after the terminal receives the network energy consumption measurement configuration information, an application (APP) of the terminal or an application server (AS) performs energy consumption measurement and generates, based on the measurement result, a network energy consumption measurement report.

The network energy consumption measurement report includes at least one of: network energy consumption measurement reference information, a service type of the measured network, an area scope of the measured network, a network slice in the measured network, a PDU session identifier in the measured network, a QoS flow in the measured network, an SNPN identifier in the measured network, an identifier of the measured public land mobile network, an identifier of the measured core network area, an identifier of the network energy consumption measurement report, a terminal identification identifier of the network energy consumption measurement report, a segmented reporting indication for the network energy consumption measurement report, a measurement time for energy consumption measurement, energy consumption information, or energy efficiency information.

For the descriptions from the network energy consumption measurement reference information to the measurement time for energy consumption measurement, reference may be made to the relevant descriptions from the network energy consumption measurement reference information to the core network area identifier in the network energy consumption measurement configuration information. The present disclosure will not repeat the same herein, but only describes other information of the network energy consumption measurement report below.

In some embodiments, the identifier of the network energy consumption measurement report is used to identify the network energy consumption measurement report, to distinguish different network energy consumption measurement reports.

In some embodiments, the terminal identification identifier of the network energy consumption measurement report is used by the terminal to identify the network energy consumption measurement report corresponding to or associated with the terminal. Compared with the identifier of the network energy consumption measurement report, the terminal identification identifier of the network energy consumption measurement report is more specific.

In some embodiments, the energy consumption information is used to represent information related to energy consumption in energy consumption measurement. The energy consumption information includes at least one of: total energy consumption, electrical energy consumption, thermal energy consumption, fuel consumption, green energy consumption, carbon intensity, carbon emissions, and renewable energy information. The renewable energy information is used to characterize renewable non-fossil energy sources.

For example, the total energy consumption is usually expressed in measurement units, such as kilowatt-hours (kW/h) or joules. The electrical energy consumption is usually measured in kilowatt-hours. The thermal energy consumption is used to express heat-related energy consumption, and is usually expressed in heat units, such as kilocalories (kcal) or joules. The fuel consumption is used to express the energy consumption generated by the use of fossil fuels or other energy sources, and is usually expressed in heat units, such as kilocalories or joules. The green energy consumption is used to represent the energy consumption generated by the use of renewable energy sources (e.g., solar energy, wind energy, hydropower), and is usually expressed in watt-hours (W/h) or kilowatt-hours. The carbon intensity is used to represent a relationship between energy use and carbon dioxide, and is usually expressed as carbon dioxide emissions per unit of energy, such as carbon dioxide emissions per kilowatt-hour. The method for calculating the carbon intensity is to first convert energy consumption into standard coal, and then calculate the carbon dioxide emissions per unit of standard coal. The calculation formula of the carbon intensity is: Carbon intensity = carbon emissions / standard coal consumption * 1,000,000. The carbon emissions may be directly measured or calculated from parameters such as energy consumption and a factor, and the standard coal consumption may be calculated from parameters such as energy consumption and an energy-to-standard coal conversion coefficient. The carbon emissions are used to represent carbon dioxide emissions per watt-hour or per kilowatt-hour. The calculation method of the carbon emissions may include the following formula: Carbon emissions = emission factor * emission amount. The emission factor represents carbon dioxide emissions generated per unit of fuel or energy. The renewable energy information is used to characterize renewable non-fossil energy sources, such as wind energy, solar energy, aerothermal energy, geothermal energy, hydrothermal energy, ocean energy, hydropower, biomass, landfill gas, wastewater treatment plant gas, or biogas, and is usually expressed in watt-hours or kilowatt-hours.

In some embodiments, the energy efficiency information is an important metric for evaluating energy consumption performance, and represents the wireless performance or throughput obtained per unit of energy consumption. The energy efficiency information includes at least one of: energy consumption efficiency, energy efficiency, and renewable energy efficiency.

For example, the energy consumption efficiency is usually expressed in units such as bits per joule (bit/J) or bits per watt-hour (bit/Wh). Energy efficiency is usually expressed as a percentage and is calculated as a ratio of effective output energy to total input energy. For example, in a case where a certain service in the terminal is measured, the calculation method defines the energy efficiency of the service as a ratio of the energy consumption of the service to the energy consumption of the terminal, expressed as a percentage. For another example, in a case where the energy efficiency of one or more slices in a cell is measured, a ratio of the energy consumption of the one or more slices to the total energy consumption of the cell or the energy consumption of all slices in the cell, expressed as a percentage, is taken as the energy efficiency of the one or more slices. The renewable energy efficiency is used to characterize a ratio of consumed renewable energy to total energy consumption, expressed as a percentage. For example, a ratio of renewable energy consumed by a certain terminal to total energy consumption of the terminal, expressed as a percentage, is taken as the renewable energy efficiency of the terminal. For another example, in a case where the renewable energy efficiency of one or more slices in a cell is measured, a ratio of the renewable energy consumed by the one or more slices to the total energy consumption of the cell or the energy consumption of all slices in the cell, expressed as a percentage, is taken as the renewable energy efficiency of the one or more slices.

In some embodiments, the terminal receives a second message to stop performing energy consumption measurement.

The second message is used to instruct the terminal to stop performing energy consumption measurement or to instruct the terminal to release the network energy consumption measurement configuration information. The second message includes at least one of: a pause indication for energy consumption measurement, a release indication for network energy consumption measurement configuration information, or an ID of the network energy consumption measurement configuration information. The second message includes RRC release information.

For example, in a case where the terminal enters a non-connected state and needs to stop energy consumption measurement or release the network energy consumption measurement configuration information, the base station sends the second message to the terminal, so that the terminal stops performing energy consumption measurement and releases the energy consumption measurement configuration information stored in the AS.

After the terminal stops energy consumption measurement due to entering the non-connected state, if the terminal re-enters a connected state, the terminal first acquires IDs of the currently connected base station and cell, and then determines whether the IDs of the base station and cell have changed. If no change occurs, the terminal actively performs energy consumption measurement. If a change occurs, the terminal monitors whether the base station resends new network energy consumption measurement configuration information. Alternatively, after the terminal re-enters the connected state, in response to receiving the start indication for energy consumption measurement carried in the network energy consumption configuration information sent by the base station, the terminal restarts performing energy consumption measurement.

In some embodiments, the terminal buffers, based on the network energy consumption measurement configuration information, the generated network energy consumption measurement report.

For example, the terminal buffers the network energy consumption measurement report based on the energy consumption threshold for energy consumption measurement carried in the network energy consumption measurement configuration information. For example, the terminal buffers the network energy consumption measurement report whose total energy consumption exceeds the energy consumption threshold for energy consumption measurement.

For another example, the terminal buffers the network energy consumption measurement report based on the buffer threshold for the network energy consumption measurement report carried in the network energy consumption measurement configuration information. For example, the terminal buffers the network energy consumption measurement report whose network energy consumption measured value is greater than the buffer threshold for the network energy consumption measurement report, and discards the network energy consumption measurement report whose network energy consumption measured value is less than or equal to the buffer threshold for the network energy consumption measurement report.

For another example, the terminal buffers the network energy consumption measurement report based on the buffer priority for the network energy consumption measurement report carried in the network energy consumption measurement configuration information. For example, the terminal preferentially buffers a network energy consumption measurement report with a high buffer priority.

For another example, the terminal may also buffer the network energy consumption measurement report based on a generation time of the network energy consumption measurement report. For example, the terminal preferentially buffers network energy consumption measurement reports generated earlier.

In S103, the network energy consumption measurement report is sent.

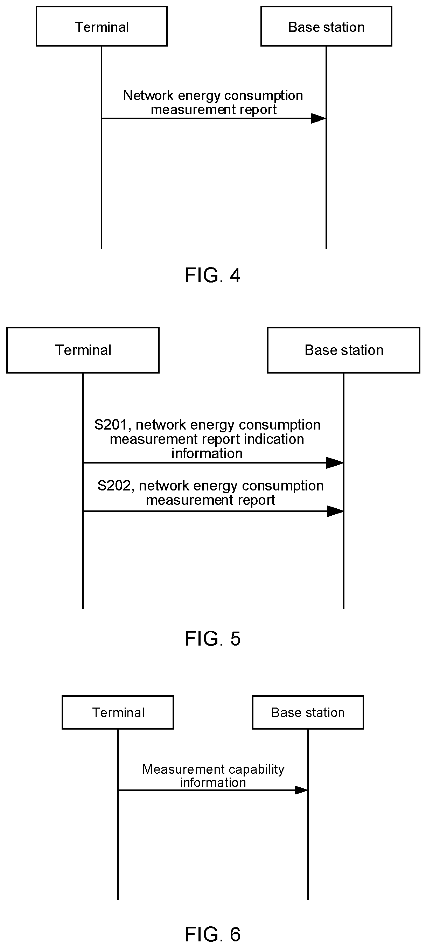

In some embodiments, in response to the terminal being in the connected state, as shown in FIG. 4, the terminal sends the network energy consumption measurement report to the base station.

In some other embodiments, in response to the terminal being in the non-connected state, the terminal sends the network energy consumption measurement report, as shown in FIG. 5, for example, it may be implemented as the following S201 and S202.

In S201, the terminal sends a network energy consumption measurement report indication message to the base station.

For example, the network energy consumption measurement report indication message is used to indicate that the terminal is required to send a network energy consumption measurement report. The network energy consumption measurement report indication message includes at least one of: an RRC reconfiguration complete message or an RRC resume complete message.

In S202, the terminal sends a network energy consumption measurement report to the base station.

The network energy consumption measurement report may be carried in uplink information. For example, the uplink information may include signals, data, or requests sent by the terminal to the base station.

It will be noted that in response to the terminal being in the non-connected state, the terminal is required to buffer the generated network energy consumption measurement report. For example, the process includes at least one of the following: in response to the storage space of the terminal not being full, the terminal directly buffers the generated network energy consumption measurement report; in response to the storage space of the terminal being full, the terminal, based on the generation time of the network energy consumption measurement report, buffers the network energy consumption measurement report and overwrites a previously buffered report with the network energy consumption measurement report (e.g., the terminal buffers the network energy consumption measurement report with the shortest generation time and uses it to overwrite the network energy consumption measurement report with the longest generation time); in response to the storage space of the terminal being full, the terminal, based on the buffer priority for the network energy consumption measurement report, buffers the network energy consumption measurement report and overwrites a previously buffered report with the network energy consumption measurement report (e.g., the terminal buffers the network energy consumption measurement report with higher buffer priority and uses it to overwrite the network energy consumption measurement report with lower priority); in response to the storage space of the terminal being full, the transmission indication for the network energy consumption measurement report of the terminal is automatically triggered, and the terminal automatically sends the network energy consumption measurement report to the base station; in response to the storage space of the terminal being full, the terminal, based on the buffer threshold for the network energy consumption measurement report, buffers the network energy consumption measurement report and overwrites a previously buffered report with the network energy consumption measurement report (e.g., the terminal buffers the network energy consumption measurement report whose occupied space is greater than the buffer threshold for the network energy consumption measurement report and uses it to overwrite the previously buffered report, while the terminal directly discards the network energy consumption measurement report whose occupied space is less than or equal to the buffer threshold for the network energy consumption measurement report, without buffering the report).

In some embodiments, the terminal sending the network energy consumption measurement report, for example, may be implemented as any one of the following: sending the network energy consumption measurement report based on the transmission period for the network energy consumption measurement report carried in the network energy consumption measurement configuration information; sending the network energy consumption measurement report based on the transmission trigger indication for the network energy consumption measurement report carried in the network energy consumption measurement configuration information; sending the network energy consumption measurement report based on the real-time transmission indication for the network energy consumption measurement report carried in the network energy consumption measurement configuration information; and sending the network energy consumption measurement report based on the buffer threshold and buffer priority for the network energy consumption measurement report carried in the network energy consumption measurement configuration information.

For example, in an example where the transmission period of the network energy consumption measurement report is 20 minutes, the terminal sends a network energy consumption measurement report to the base station every 20 minutes.

For another example, in response to the energy consumption value, energy efficiency threshold, renewable energy threshold, or carbon emission threshold in the network energy consumption measurement report reaching the corresponding energy consumption threshold, energy efficiency threshold, renewable energy threshold, or carbon emission threshold in the transmission trigger indication for the network energy consumption measurement report, the terminal sends the network energy consumption measurement report to the base station.

For another example, in response to the network energy consumption measurement configuration information carrying the real-time transmission indication for the network energy consumption measurement report, the terminal directly sends the network energy consumption measurement report to the base station after generating the network energy consumption measurement report.

For another example, the terminal, based on the periodic transmission indication for the network energy consumption measurement report, buffers the generated network energy consumption measurement reports according to the buffering process of the network energy consumption measurement report described above, and sends the network energy consumption measurement reports to the base station according to a preset transmission period.

In this way, the terminal may perform energy consumption measurement on the network based on the network energy consumption measurement configuration information, and generate a network energy consumption measurement report based on the energy consumption measurement result, so as to facilitate the monitoring and management of the network energy consumption, thereby achieving the effect of saving energy.

In some embodiments, as shown in FIG. 6, before the terminal acquires the network energy consumption measurement configuration information, the terminal sends measurement capability information (e.g., UE capability information) to the base station.

The measurement capability information is used to characterize the capability of the terminal to perform energy consumption measurement. The measurement capability information is used to indicate at least one of the following: whether energy consumption measurement is supported; whether energy consumption measurement in a connected state or a non-connected state is supported; whether transmission of the network energy consumption measurement report via SRB4 or SRB5 is supported; whether energy consumption measurement for a service type is supported; whether energy consumption measurement in a dual connectivity scenario is supported; or whether segmented transmission of the network energy consumption measurement report is supported.

For example, the measurement capability information sent by the terminal to the base station includes at least one of the following: the terminal supports energy consumption measurement; the terminal supports energy consumption measurement in a connected state or a non-connected state; the terminal supports sending the network energy consumption measurement report via SRB4 or SRB5; the terminal supports energy consumption measurement for a DASH type, MTSI type, VR type, AR type, XR type, data service type, voice service type, IoT service type, real-time communication service type, or location service type; the terminal supports energy consumption measurement in a dual connectivity (DC) scenario; or the terminal supports segmented transmission of the network energy consumption measurement report.

In this way, the base station may learn the capability of the terminal to perform energy consumption measurement based on the measurement capability information, so as to well configure the network energy consumption measurement configuration information, thereby improving the efficiency of energy consumption measurement.

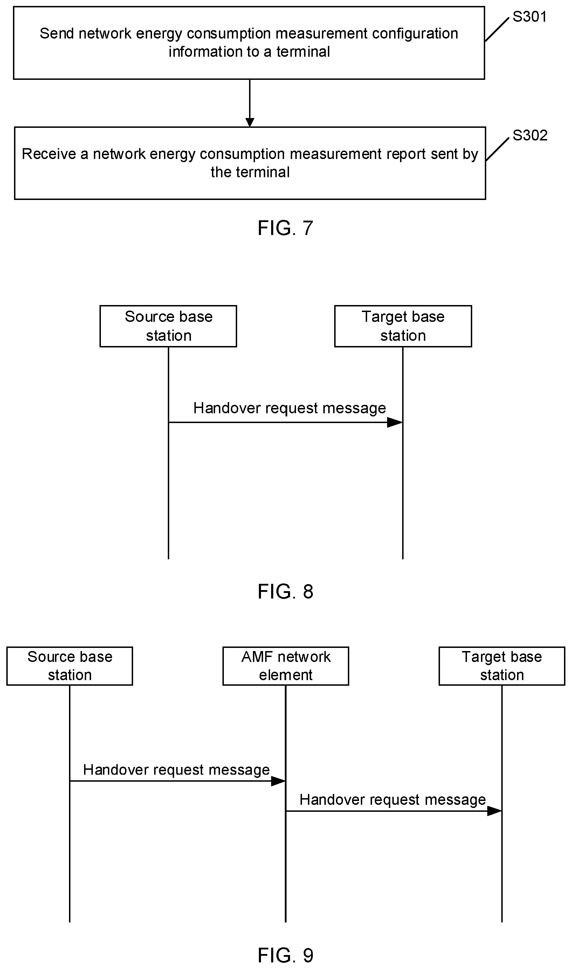

FIG. 7 is a flow chart of an energy consumption measurement method, in accordance with the present disclosure. As shown in FIG. 7, the energy consumption measurement method is applied to a base station and includes the following S301 and S302.

In S301, network energy consumption measurement configuration information is sent to a terminal.

In some embodiments, the base station sends a first message to the terminal.

The first message includes the network energy consumption measurement configuration information. The first message includes at least one of: an RRC protocol reconfiguration message or an RRC resume message. The network energy consumption measurement configuration information includes at least one of: network energy consumption measurement reference information, a service type, an area scope, a network slice identifier, a PDU session identifier, a QoS flow, an SNPN identifier, a public land mobile network identifier, a core network area identifier, an energy consumption measurement priority, an energy consumption threshold for energy consumption measurement, a target functional entity address, a measurement interval for energy consumption measurement, a measurement type of energy consumption measurement, a transmission period for a network energy consumption measurement report, a transmission trigger indication for a network energy consumption measurement report, a real-time transmission indication for a network energy consumption measurement report, a periodic transmission indication for a network energy consumption measurement report, a start indication for energy consumption measurement, a measurement time for energy consumption measurement, a pause indication for energy consumption measurement, a pause transmission indication for a network energy consumption measurement report, a buffer quantity indication for a network energy consumption measurement report, a segmented transmission indication for a network energy consumption measurement report, a buffer threshold for a network energy consumption measurement report, or a buffer priority for a network energy consumption measurement report.

In some embodiments, the network energy consumption measurement reference information is a unique identifier for identifying the network energy consumption measurement configuration information, and consists of a plurality of pieces of identification information. The network energy consumption measurement reference information includes at least one of: a mobile country code (MCC), a mobile network code (MNC), a tracking area code (TAC), a public land mobile network identity (PLMN ID), a next generation node B identity (gNB ID), a location area code (LAC), or an identifier (ID) of the network energy consumption measurement reference information. The identifier (ID) of the network energy consumption measurement reference information is used to distinguish its corresponding network energy consumption measurement reference information from other pieces of network energy consumption measurement reference information under the same conditions.

In some embodiments, the service type is used to characterize a service type of the network to be measured. The service type includes at least one of: a dynamic adaptive streaming over HTTP (DASH) type, a multimedia telephony service for IMS (MTSI) type, a virtual reality (VR) type, an augmented reality (AR) type, an extended reality (XR) type, a data service type, a voice service type, an Internet of Things (IoT) service type, a real-time communication service type, or a location service type.

In some embodiments, the area scope is used to characterize an area scope of the network to be measured. The area scope includes at least one of: a cell based area scope, a timing advance based (TA based) area scope, a tracking area identity based (TAI based) area scope, a public land mobile network area based (PLMN area based) area scope, a user plane positioning area based area scope, a user plane service area (UPSA) based area scope, or a preset marked area based area scope.

In some embodiments, slice information in the network to be measured is identified based on the network slice identifier carried in the network energy consumption measurement configuration information. The network slice identifier may include a single network slice selection assistance information (S-NSSAI) parameter or a network slice assistance information group ID (NSAG ID).

In some embodiments, the protocol data unit (PDU) session identifier (PDU session ID) includes a numeric identifier used to identify a PDU session in the network to be measured. For example, the PDU session ID (INTEGER (0..255)) means that the PDU session ID is an integer within a range of 0 to 255, inclusive.

In some embodiments, the QoS flow identifier is used to identify a QoS flow in the network to be measured. For example, the QoS flow identifier (INTEGER (0..63)) means that the QoS flow identifier is an integer within a range of 0 to 63, inclusive.

In some embodiments, the SNPN identifier may be a network identifier (NID) used to identify an SNPN in the network to be measured. The NID is completely independent of the PLMN ID.

In some embodiments, the public land mobile network identifier may be a content access gateway identifier (GAG ID) used to identify network access authorities of public network users and private network users in the network to be measured. The GAG ID is a special access identifier possessed by a public network integrated-non-public network (PNI-NPN) device.

In some embodiments, the core network area identifier is used to identify a core network area in the network to be measured. For example, the core network area identifier may include numbers, letters, symbols, or specific codes.

In some embodiments, the energy consumption measurement priority is used to characterize a priority or energy-saving level of the network energy consumption measurement configuration information. For example, the higher the energy consumption measurement priority, the higher the energy-saving requirement for the network to be measured, and the higher the transmission priority of the subsequent network energy consumption measurement report.

In some embodiments, the energy consumption threshold for energy consumption measurement characterizes an upper limit set for energy consumption of the terminal or base station at a certain granularity, within a unit time, a specific time period, or a specific space. For example, energy consumed per unit time is measured in watts, and energy consumed within a specific time period or a specific space is measured in kilowatt-hours.

In some embodiments, the higher-layer entity address is used to characterize an address of a higher-layer entity that receives the network energy consumption measurement report. The higher-layer entity address may include an Internet Protocol (IP) address of the higher-layer entity.

In some embodiments, the measurement interval for energy consumption measurement is used to characterize the measurement interval when the terminal performs energy consumption measurement on the network to be measured. For example, the measurement interval for energy consumption measurement is 5 minutes, which means that the terminal performs one energy consumption measurement on the network to be measured every 5 minutes and generates a corresponding network energy consumption measurement report.

In some embodiments, the measurement type of energy consumption measurement is used to characterize a type of current energy consumption measurement and a type of the network energy consumption measurement report. The measurement type of energy consumption measurement includes at least one of: an energy consumption type, an energy efficiency type, a renewable energy type, or a carbon emission type. For example, in a case where the measurement type of energy consumption measurement includes the energy consumption type, the terminal, upon performing energy consumption measurement on the network to be measured, measures the energy consumption of the network to be measured and generates a network energy consumption measurement report related to energy consumption.

In some embodiments, the transmission period for the network energy consumption measurement report is used not only to indicate a period for transmitting the network energy consumption measurement report, but also to indicate a measurement period for energy consumption measurement. The network energy consumption measurement report is configured by the higher-layer entity.

In some embodiments, the transmission trigger indication for the network energy consumption measurement report is used to characterize a triggering event for transmitting the network energy consumption measurement report. The transmission trigger indication for the network energy consumption measurement report includes at least one of: an energy consumption threshold, an energy efficiency threshold, a renewable energy utilization rate threshold, or a carbon emission threshold.

In some embodiments, the real-time transmission indication for the network energy consumption measurement report is used to instruct the terminal to directly send the generated network energy consumption measurement report after the terminal completes one measurement within the measurement interval for energy consumption measurement.

In some embodiments, the periodic transmission indication for the network energy consumption measurement report is used to instruct the terminal to send the network energy consumption measurement report based on the transmission period for the network energy consumption measurement report. For example, after the terminal generates the network energy consumption measurement reports and stores the reports locally, upon expiration of the transmission period for the network energy consumption measurement report, the terminal sends the locally stored network energy consumption measurement reports in batches.

In some embodiments, the start indication for energy consumption measurement is used to instruct the terminal to start or resume energy consumption measurement.

In some embodiments, the measurement time for energy consumption measurement is used to indicate time information related to energy consumption measurement. The measurement time for energy consumption measurement includes at least one of: a start timestamp of energy consumption measurement, a stop timestamp of energy consumption measurement, a duration of energy consumption measurement, or a valid time of energy consumption measurement.

In some embodiments, the pause indication for energy consumption measurement is used to instruct the terminal to stop performing energy consumption measurement or to release the corresponding network energy consumption measurement configuration information.

In some embodiments, the pause transmission indication for the network energy consumption measurement report is used to instruct the terminal to stop transmitting the network energy consumption measurement report.

In some embodiments, the buffer quantity indication for the network energy consumption measurement report is used to indicate the maximum number of network energy consumption measurement reports that are able to be buffered.

In some embodiments, the segmented transmission indication for the network energy consumption measurement report is used to indicate whether the terminal supports segmented transmission of the network energy consumption measurement report.

In some embodiments, the buffer threshold for the network energy consumption measurement report is used to indicate that the network energy consumption measurement report is stored or discarded in response to a corresponding measured value being greater than or less than a preset threshold.

In some embodiments, the buffer priority for the network energy consumption measurement report is used to characterize a priority of the network energy consumption measurement report.

In some embodiments, the network energy consumption measurement configuration information further includes at least one of: a radio access network (RAN) visible period of the network energy consumption measurement report, a RAN visible buffer quantity of the network energy consumption measurement report, a signaling radio bearer (SRB) indication, or an entity generating the network energy consumption measurement configuration information.

It will be noted that in a case where the terminal is handed over from a source base station (gNB) to a target base station due to movement of the terminal, and the target base station continues to instruct the terminal to perform energy consumption measurement, the source base station is required to send network energy consumption measurement configuration information to the target base station.

On this basis, in some embodiments, in response to the base station being the source base station of the terminal, the base station sends the network energy consumption measurement configuration information to the target base station of the terminal.

Correspondingly, in response to the base station being the target base station of the terminal, the base station receives the network energy consumption measurement configuration information sent by the source base station of the terminal.

For example, as shown in FIG. 8, the source base station sends a handover request message to the target base station via a communication interface (Xn). The handover request message is used to indicate that the terminal to be handed over from the source base station to the target base station. The handover request message includes the network energy consumption measurement configuration information.

For another example, as shown in FIG. 9, in response to the source base station sending a handover request message to the target base station via a communication interface (Xn) or a connection interface (next generation (NG)), the source base station may send the handover request message to the target base station via an AMF (Authentication Management Function) network element. For example, the handover request message may be a source to target transparent container information element or dedicated signaling. The handover request message includes the network energy consumption measurement configuration information.

It will be noted that the terminal supports an application scenario of energy consumption measurement in dual connectivity. The base station may determine, based on network energy consumption measurement configuration information configured by the higher-layer entity, whether energy consumption measurement involves a single base station or dual base stations.

For example, in a case where the measurement object indicated by the network energy consumption measurement configuration information is of a granularity such as network slice, PDU session, or QoS, it means that this energy consumption measurement is energy consumption measurement monitored by a single base station. In a case where the measurement object indicated by the network energy consumption measurement configuration information is of a granularity such as terminal or service, this energy consumption measurement involves energy consumption measurement monitored by two base stations. For the two base stations to which the terminal is connected, one is referred to as a master node (M-gNB) of the terminal, and the other is referred to as a secondary node (S-gNB) of the terminal.

For energy consumption measurement involving monitoring by a single base station, reference may be made to the relevant description above, and the present disclosure will not repeat the same herein. Energy consumption measurement involving monitoring by two base stations is described below.

In some embodiments, the base station is the master node of the terminal, and before sending network energy consumption measurement configuration information to the terminal, the base station receives network energy consumption measurement configuration information sent by the higher-layer entity or the secondary node of the terminal.

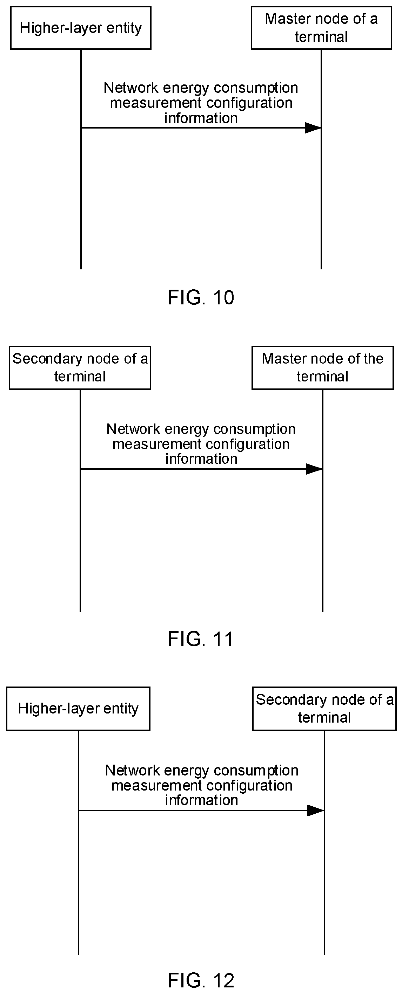

For example, as shown in FIG. 10, the master node of the terminal receives network energy consumption measurement configuration information sent by the higher-layer entity.

For another example, in a case where the higher-layer entity sends network energy consumption measurement configuration information to the secondary node of the terminal, as shown in FIG. 11, the master node of the terminal receives network energy consumption measurement configuration information sent by the secondary node of the terminal.

In some embodiments, the base station is the secondary node of the terminal, and before sending network energy consumption measurement configuration information to the terminal, the base station receives network energy consumption measurement configuration information sent by the higher-layer entity or the master node of the terminal.

For example, as shown in FIG. 12, the secondary node of the terminal receives network energy consumption measurement configuration information sent by the higher-layer entity.

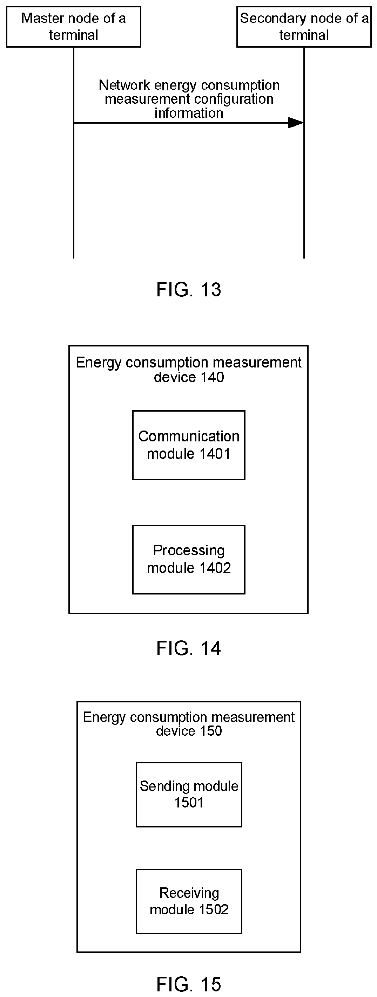

For another example, in a case where the higher-layer entity sends network energy consumption measurement configuration information to the master node of the terminal, as shown in FIG. 13, the secondary node of the terminal receives network energy consumption measurement configuration information sent by the master node of the terminal.

It will be noted that the network energy consumption measurement configuration information described above may be carried in dedicated signaling. For example, the dedicated signaling may be either node addition signaling (S-NODE ADDITION REQUEST) or modification request signaling (S-NODE MODIFICATION REQUEST). For example, the higher-layer entity includes any one of: an energy-saving entity, an energy consumption measurement entity, an operations, administration and maintenance (OAM) network element, and an authentication management function (AMF) network element.

In some embodiments, before sending network energy consumption measurement configuration information to the terminal, the base station receives measurement capability information sent by the terminal.

The measurement capability information is used to characterize the capability of the terminal to perform energy consumption measurement. The measurement capability information is used to indicate at least one of the following: whether energy consumption measurement is supported; whether energy consumption measurement in a connected state or a non-connected state is supported; whether transmission of the network energy consumption measurement report via SRB4 or SRB5 is supported; whether energy consumption measurement for a service type is supported; whether energy consumption measurement in a dual connectivity scenario is supported; or whether segmented transmission of the network energy consumption measurement report is supported.

In some embodiments, the base station sends a second message to the terminal.

The second message is used to instruct the terminal to stop performing energy consumption measurement or to instruct the terminal to release the network energy consumption measurement configuration information. The second message includes at least one of: a pause indication for energy consumption measurement, a release indication for network energy consumption measurement configuration information, or an ID of the network energy consumption measurement configuration information. The second message includes RRC release information.

In S302, the network energy consumption measurement report sent by the terminal is received.

The network energy consumption measurement report is generated by the terminal based on the network energy consumption measurement configuration information. The network energy consumption measurement configuration information includes at least one of: network energy consumption measurement reference information, a service type, an area scope, a network slice identifier, a PDU session identifier, a QoS flow, an SNPN identifier, a public land mobile network identifier, a core network area identifier, an energy consumption measurement priority, an energy consumption threshold for energy consumption measurement, a target functional entity address, a measurement interval for energy consumption measurement, a measurement type of energy consumption measurement, a transmission period for a network energy consumption measurement report, a transmission trigger indication for a network energy consumption measurement report, a real-time transmission indication for a network energy consumption measurement report, a periodic transmission indication for a network energy consumption measurement report, a start indication for energy consumption measurement, a measurement time for energy consumption measurement, a pause indication for energy consumption measurement, a pause transmission indication for a network energy consumption measurement report, a buffer quantity indication for a network energy consumption measurement report, a segmented transmission indication for a network energy consumption measurement report, a buffer threshold for a network energy consumption measurement report, or a buffer priority for a network energy consumption measurement report.

In some embodiments, the base station sends the network energy consumption measurement report to the higher-layer entity.

In a single connectivity scenario, the node, connected to the terminal that sends the network energy consumption measurement report, is determined based on the base station involved.

For example, in a case where the base station involved is the master node of the terminal, the master node of the terminal directly sends the network energy consumption measurement report to the higher-layer entity upon receiving the network energy consumption measurement report sent by the terminal.

In a dual connectivity scenario, the node that sends the network energy consumption measurement report is determined based on the node that receives the network energy consumption measurement configuration information.

For example, the master node and secondary node of the terminal each send their corresponding network energy consumption measurement reports to the higher-layer entity, and indicate, via indication information, the sending entities of the network energy consumption measurement reports. Alternatively, the master node and secondary node of the terminal each, based on network energy consumption measurement configuration information, send their corresponding network energy consumption measurement reports to the higher-layer entity, and indicate, via indication information, the sending entities of the network energy consumption measurement reports.

For another example, in a case where the master node of the terminal receives network energy consumption measurement configuration information sent by the higher-layer entity, the secondary node of the terminal sends its own corresponding network energy consumption measurement report to the master node of the terminal, and indicates, via indication information, that the sending entity of the report is the secondary node of the terminal. Furthermore, after receiving the network energy consumption measurement report sent by the secondary node of the terminal, the master node of the terminal integrates the network energy consumption measurement report sent by the secondary node of the terminal and the network energy consumption measurement report corresponding to the master node of the terminal and sends the integrated reports to the higher-layer entity, and indicates, via indication information, the sending entities of the two network energy consumption measurement reports.

For another example, in a case where the secondary node of the terminal receives network energy consumption measurement configuration information sent by the higher-layer entity, the master node of the terminal sends its own corresponding network energy consumption measurement report to the secondary node of the terminal, and indicates, via indication information, that the sending entity of the report is the master node of the terminal. Furthermore, after receiving the network energy consumption measurement report sent by the master node of the terminal, the secondary node of the terminal integrates the network energy consumption measurement report sent by the master node of the terminal and the network energy consumption measurement report corresponding to the secondary node of the terminal and sends the integrated reports to the higher-layer entity, and indicates, via indication information, the sending entities of the two network energy consumption measurement reports.

In this way, the base station sends network energy consumption measurement configuration information to the terminal, enabling the terminal to perform energy consumption measurement based on the network energy consumption measurement configuration information, generate a network energy consumption measurement report based on the measurement result, and then analyze the network energy consumption status based on the network energy consumption measurement report, so as to further adjust relevant configurations and reduce network energy consumption.

It may be understood that, in order to implement the functions described above, an energy consumption measurement device includes corresponding hardware structures and/or corresponding software modules for performing various functions. Those skilled in the art will easily realize that the present disclosure may be implemented in the form of hardware or a combination of hardware and computer software, with reference to the algorithm steps of the examples described in the embodiments of the present disclosure. Whether a function is performed by hardware or computer software-driven hardware depends on the specific applications and design constraints of the technical solutions. Professional technicians may use different methods to implement the described functions for each particular application, but such implementation will not be considered beyond the scope of the present disclosure.

In the embodiments of the present disclosure, the energy consumption measurement device may be divided into functional modules according to the method embodiments described above. For example, each functional module may be divided corresponding to each function, or two or more functions may be integrated into one functional module. The integrated module described above may be implemented in the form of hardware or software. It will be noted that the division of modules in the embodiments of the present disclosure is schematic, and is merely a kind of logical function division, and there may be other division manners in actual implementation. The description is given below by considering an example in which each functional module is divided corresponding to each function.

FIG. 14 is a schematic diagram showing a structure of an energy consumption measurement device applied to a terminal, in accordance with embodiments of the present disclosure, and the energy consumption measurement device 140 may perform the energy consumption measurement method provided in the method embodiments described above. As shown in FIG. 14, the energy consumption measurement device 140 includes a communication module 1401 and a processing module 1402.

The communication module 1401 is configured to acquire energy consumption measurement configuration information.

The processing module 1402 is configured to generate a network energy consumption measurement report based on network energy consumption measurement configuration information.

The communication module 1401 is further configured to send the network energy consumption measurement report.

In some embodiments, the network energy consumption measurement configuration information includes at least one of: network energy consumption measurement reference information, a service type, an area scope, a network slice identifier, a PDU session identifier, a QoS flow, an SNPN identifier, a public land mobile network identifier, a core network area identifier, an energy consumption measurement priority, an energy consumption threshold for energy consumption measurement, a higher-layer entity address, a measurement interval for energy consumption measurement, a measurement type of energy consumption measurement, a transmission period for a network energy consumption measurement report, a transmission trigger indication for a network energy consumption measurement report, a real-time transmission indication for a network energy consumption measurement report, a periodic transmission indication for a network energy consumption measurement report, a start indication for energy consumption measurement, a measurement time for energy consumption measurement, a pause indication for energy consumption measurement, a pause transmission indication for a network energy consumption measurement report, a buffer quantity indication for a network energy consumption measurement report, a segmented transmission indication for a network energy consumption measurement report, a buffer threshold for a network energy consumption measurement report, or a buffer priority for a network energy consumption measurement report.

In some embodiments, the network energy consumption measurement reference information includes at least one of: a mobile country code (MCC), a mobile network code (MNC), a tracking area code (TAC), a public land mobile network identity (PLMN ID), a next generation node B identity (gNB ID), a location area code (LAC), or an identifier (ID) of the network energy consumption measurement reference information.

In some embodiments, the service type includes at least one of: a dynamic adaptive streaming over HTTP (DASH) type, a multimedia telephony service for IMS (MTSI) type, a virtual reality (VR) type, an augmented reality (AR) type, an extended reality (XR) type, a data service type, a voice service type, an Internet of Things (IoT) service type, a real-time communication service type, or a location service type.

In some embodiments, the area scope includes at least one of: a cell based area scope, a timing advance based (TA based) area scope, a tracking area identity based (TAI based) area scope, a public land mobile network area based area scope, a user plane positioning area based area scope, a user plane service area (UPSA) based area scope, or a preset marked area based area scope.

In some embodiments, the measurement type of energy consumption measurement includes at least one of: an energy consumption type, an energy efficiency type, a renewable energy type, or a carbon emission type.

In some embodiments, the transmission trigger indication for the network energy consumption measurement report includes at least one of: an energy consumption threshold, an energy efficiency threshold, a renewable energy utilization rate threshold, or a carbon emission threshold.

In some embodiments, the measurement time for energy consumption measurement includes at least one of: a start timestamp of energy consumption measurement, a stop timestamp of energy consumption measurement, a duration of energy consumption measurement, or a valid time of energy consumption measurement.

In some embodiments, the network energy consumption measurement configuration information further includes at least one of: a radio access network (RAN) visible period of the network energy consumption measurement report, a RAN visible buffer quantity of the network energy consumption measurement report, a signaling radio bearer (SRB) indication, or an entity generating the network energy consumption measurement configuration information.

In some embodiments, the communication module 1401, for example, is configured to receive a first message sent by a base station. The first message includes the network energy consumption measurement configuration information. The first message includes at least one of: an RRC protocol reconfiguration message or an RRC resume message.

In some embodiments, the communication module 1401 is further configured to receive a second message. The second message is used to instruct the terminal to stop performing energy consumption measurement or to instruct the terminal to release the network energy consumption measurement configuration information.

In some embodiments, the second message includes at least one of: a pause indication for energy consumption measurement, a release indication for network energy consumption measurement configuration information, or an ID of network energy consumption measurement configuration information. The second message includes RRC release information.

In some embodiments, the network energy consumption measurement report includes at least one of: network energy consumption measurement reference information, a service type of the measured network, an area scope of the measured network, a network slice in the measured network, a PDU session identifier in the measured network, a QoS flow in the measured network, an SNPN identifier in the measured network, an identifier of the measured public land mobile network, an identifier of the measured core network area, an identifier of the network energy consumption measurement report, a terminal identification identifier of the network energy consumption measurement report, a segmented reporting indication for the network energy consumption measurement report, a measurement time for energy consumption measurement, energy consumption information, or energy efficiency information.

In some embodiments, the communication module 1401, for example, is configured to: send the network energy consumption measurement report based on the transmission period for the network energy consumption measurement report carried in the network energy consumption measurement configuration information; send the network energy consumption measurement report based on the transmission trigger indication for the network energy consumption measurement report carried in the network energy consumption measurement configuration information; send the network energy consumption measurement report based on the real-time transmission indication for the network energy consumption measurement report carried in the network energy consumption measurement configuration information; and send the network energy consumption measurement report based on the buffer threshold and buffer priority for the network energy consumption measurement report carried in the network energy consumption measurement configuration information.

In some embodiments, the communication module 1401 is further configured to send measurement capability information. The measurement capability information is used to characterize the capability of the terminal to perform energy consumption measurement.

In some embodiments, the measurement capability information is used to indicate at least one of the following: whether energy consumption measurement is supported; whether energy consumption measurement in a connected state or a non-connected state is supported; whether transmission of the network energy consumption measurement report via SRB4 or SRB5 is supported; whether energy consumption measurement for a service type is supported; whether energy consumption measurement in a dual connectivity scenario is supported; or whether segmented transmission of the network energy consumption measurement report is supported.

FIG. 15 is a schematic diagram showing a structure of an energy consumption measurement device applied to a base station, in accordance with embodiments of the present disclosure, and the energy consumption measurement device 150 may perform the energy consumption measurement method provided in the method embodiments described above. As shown in FIG. 15, the energy consumption measurement device 150 includes a sending module 1501 and a receiving module 1502.

The sending module 1501 is configured to send network energy consumption measurement configuration information to a terminal.

The receiving module 1502 is configured to receive a network energy consumption measurement report sent by the terminal. The network energy consumption measurement report is generated by the terminal based on the network energy consumption measurement configuration information.

In some embodiments, the network energy consumption measurement configuration information includes at least one of: network energy consumption measurement reference information, a service type, an area scope, a network slice identifier, a PDU session identifier, a QoS flow, an SNPN identifier, a public land mobile network identifier, a core network area identifier, an energy consumption measurement priority, an energy consumption threshold for energy consumption measurement, a target functional entity address, a measurement interval for energy consumption measurement, a measurement type of energy consumption measurement, a transmission period for a network energy consumption measurement report, a transmission trigger indication for a network energy consumption measurement report, a real-time transmission indication for a network energy consumption measurement report, a periodic transmission indication for a network energy consumption measurement report, a start indication for energy consumption measurement, a measurement time for energy consumption measurement, a pause indication for energy consumption measurement, a pause transmission indication for a network energy consumption measurement report, a buffer quantity indication for a network energy consumption measurement report, a segmented transmission indication for a network energy consumption measurement report, a buffer threshold for a network energy consumption measurement report, or a buffer priority for a network energy consumption measurement report.

In some embodiments, the base station is a master node of the terminal, and the receiving module 1502, for example, is configured to receive network energy consumption measurement configuration information sent by a higher-layer entity or a secondary node of the terminal.

In some embodiments, the base station is a secondary node of the terminal, and the receiving module 1502, for example, is configured to receive network energy consumption measurement configuration information sent by a higher-layer entity or a master node of the terminal.

In some embodiments, the higher-layer entity includes any one of: an energy-saving entity, an energy consumption measurement entity, an operation administration and maintenance (OAM) network element, and an authentication management function (AMF) network element.

In some embodiments, the sending module 1501 is further configured to: send the network energy consumption measurement configuration information to a target base station of the terminal in response to the base station being a source base station of the terminal.

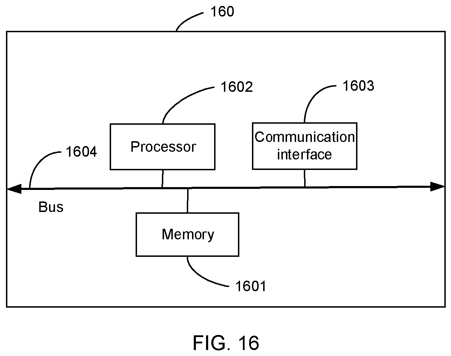

In a case where the functions of the integrated modules described above are implemented in the form of hardware, another structure of the energy consumption measurement device involved in the embodiments described above is provided in the embodiments of the present disclosure. As shown in FIG. 16, the energy consumption measurement device 160 includes: a processor 1602 and a bus 1604. In some embodiments, the energy consumption measurement device 160 may further include a memory 1601. In some embodiments, the energy consumption measurement device 160 may further include a communication interface 1603.

The processor 1602 may implement or execute various exemplary logical blocks, modules, and circuits described in conjunction with the embodiments of the present disclosure. The processor 1602 may be a central processing unit, a general-purpose processor, a digital signal processor, an application specific integrated circuit, a field programmable gate array, or other programmable logic components, a transistor logic component, a hardware component, or any combination thereof. The processor 1602 may implement or execute various exemplary logical blocks, modules, and circuits described in conjunction with the embodiments of the present disclosure. The processor 1602 may also be a combination for implementing computing functions, such as a combination of one or more microprocessors, or a combination of a digital signal processor (DSP) and a microprocessor.

The communication interface 1603 is configured to connect to other devices via a communication network. The communication network may include Ethernet, a radio access network, a wireless local area network (WLAN), or the like.

The memory 1601 may include, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or other magnetic storage device, or any other medium capable of being used to carry or store desired program code and capable of being accessed by a computer, and the desired program code has instructions or is in the form of data structures.

As an implementation, the memory 1601 may exist independently of the processor 1602, and the memory 1601 may be connected to the processor 1602 via the bus 1604 and configured to store instructions or program code. When invoking and executing the instructions or program code stored in the memory 1601, the processor 1602 may perform the energy consumption measurement method provided in the embodiments of the present disclosure.

In another implementation, the memory 1601 may also be integrated with the processor 1602.

The bus 1604 may be an extended industry standard architecture (EISA) bus or the like. The bus 1604 may be classified as an address bus, a data bus, a control bus, and the like. For convenience of representation, only one bold line is used in FIG. 16, but this does not mean that there is only one bus or only one type of bus.

A computer-readable storage medium (e.g., a non-transitory computer-readable storage medium) is provided in some embodiments of the present disclosure. The computer-readable storage medium stores computer program instructions. When the computer program instructions are run on a computer, the computer is enabled to perform the energy consumption measurement method as described in any one of the embodiments described above.

For example, the computer-readable storage medium may include, but is not limited to: a magnetic storage device (e.g., a hard disk, a floppy disk, or a magnetic tape), an optical disk (e.g., a compact disk (CD), a digital versatile disk (DVD)), a smart card, and a flash memory device (e.g., an erasable programmable read-only memory (EPROM), a card, a stick, or a key drive). The computer-readable storage media described in the present disclosure may represent one or more devices and/or other machine-readable storage media for storing information. The term "machine-readable storage medium" may include, but is not limited to, radio channels and a variety of other media capable of storing, containing, and/or carrying instructions and/or data.

A computer program product including instructions is provided in the embodiments of the present disclosure. The computer program product, upon being run on a computer, enables the computer to perform the energy consumption measurement method as described in any one of the embodiments described above.

In the embodiments of the present disclosure, the terminal may perform energy consumption measurement on the network based on the network energy consumption measurement configuration information, and generate a network energy consumption measurement report based on the energy consumption measurement result, so as to facilitate the monitoring and management of the network energy consumption, thereby achieving the effect of saving energy.

The above are merely specific implementations of the present disclosure, but the protection scope of the present disclosure is not limited thereto. Any variations or replacements within the technical scope disclosed in the present disclosure will fall within the protection scope of the present disclosure. Therefore, the protection scope of the present disclosure will be subject to the protection scope of the claims.

## Claims

1. An energy consumption measurement method, applied to a terminal, comprising:
acquiring network energy consumption measurement configuration information;
generating, based on the network energy consumption measurement configuration information, a network energy consumption measurement report; and
sending the network energy consumption measurement report.

2. The method according to claim 1, wherein the network energy consumption measurement configuration information includes at least one of: network energy consumption measurement reference information, a service type, an area scope, a network slice identifier, a protocol data unit (PDU) session identifier, a Quality of Service (QoS) flow, a stand-alone non-public network (SNPN) identifier, a public land mobile network identifier, a core network area identifier, an energy consumption measurement priority, an energy consumption threshold for energy consumption measurement, a higher-layer entity address, a measurement interval for energy consumption measurement, a measurement type of energy consumption measurement, a transmission period for the network energy consumption measurement report, a transmission trigger indication for the network energy consumption measurement report, a real-time transmission indication for the network energy consumption measurement report, a periodic transmission indication for the network energy consumption measurement report, a start indication for energy consumption measurement, a measurement time for energy consumption measurement, a pause indication for energy consumption measurement, a pause transmission indication for the network energy consumption measurement report, a buffer quantity indication for the network energy consumption measurement report, a segmented transmission indication for the network energy consumption measurement report, a buffer threshold for the network energy consumption measurement report, or a buffer priority for the network energy consumption measurement report.

3. The method according to claim 2, wherein the network energy consumption measurement reference information includes at least one of: a mobile country code (MCC), a mobile network code (MNC), a tracking area code (TAC), a public land mobile network identity (PLMN ID), a next generation node B identity (gNB ID), a location area code (LAC), or an identifier (ID) of the network energy consumption measurement reference information.

4. The method according to claim 2, wherein the service type includes at least one of: a dynamic adaptive streaming over HTTP (DASH) type, a multimedia telephony service for IMS (MTSI) type, a virtual reality (VR) type, an augmented reality (AR) type, an extended reality (XR) type, a data service type, a voice service type, an Internet of Things (IoT) service type, a real-time communication service type, or a location service type.

5. The method according to claim 2, wherein the area scope includes at least one of: a cell based area scope, a timing advance based (TA based) area scope, a tracking area identity based (TAI based) area scope, a public land mobile network (PLMN) area based area scope, a user plane positioning area based area scope, a user plane service area (UPSA) based area scope, or a preset marked area based area scope.

6. The method according to claim 2, wherein the measurement type of energy consumption measurement includes at least one of: an energy consumption type, an energy efficiency type, a renewable energy type, or a carbon emission type.

7. The method according to claim 2, wherein the transmission trigger indication for the network energy consumption measurement report includes at least one of: an energy consumption threshold, an energy efficiency threshold, a renewable energy threshold, or a carbon emission threshold.

8. The method according to claim 2, wherein the measurement time for energy consumption measurement includes at least one of: a start timestamp of energy consumption measurement, a stop timestamp of energy consumption measurement, a duration of energy consumption measurement, or a valid time of energy consumption measurement.

9. The method according to claim 2, wherein the network energy consumption measurement configuration information further includes at least one of: a radio access network (RAN) visible period of the network energy consumption measurement report, a RAN visible buffer quantity of the network energy consumption measurement report, a signaling radio bearer (SRB) indication, or an entity generating the network energy consumption measurement configuration information.

10. The method according to claim 1, wherein the acquiring the network energy consumption measurement configuration information, includes:
receiving a first message sent by a base station, the first message including the network energy consumption measurement configuration information; wherein the first message includes at least one of: a radio resource control (RRC) protocol reconfiguration message or an RRC resume message.

11. The method according to claim 1, further comprising:
receiving a second message, the second message being used to instruct the terminal to stop performing energy consumption measurement or to instruct the terminal to release the network energy consumption measurement configuration information.

12. The method according to claim 11, wherein the second message includes at least one of: a pause indication for energy consumption measurement, a release indication for the network energy consumption measurement configuration information, or an ID of the network energy consumption measurement configuration information; the second message includes RRC release information.

13. The method according to claim 1, wherein the network energy consumption measurement report includes at least one of: network energy consumption measurement reference information, a service type of a measured network, an area scope of the measured network, a network slice in the measured network, a PDU session identifier in the measured network, a QoS flow in the measured network, an SNPN identifier in the measured network, an identifier of a measured public land mobile network, an identifier of a measured core network area, an identifier of the network energy consumption measurement report, a terminal identification identifier of the network energy consumption measurement report, a segmented reporting indication for the network energy consumption measurement report, a measurement time for energy consumption measurement, energy consumption information, or energy efficiency information.

14. The method according to claim 2, wherein the sending the network energy consumption measurement report, includes any one of:
sending the network energy consumption measurement report based on the transmission period for the network energy consumption measurement report carried in the network energy consumption measurement configuration information;
sending the network energy consumption measurement report based on the transmission trigger indication for the network energy consumption measurement report carried in the network energy consumption measurement configuration information;
sending the network energy consumption measurement report based on the real-time transmission indication for the network energy consumption measurement report carried in the network energy consumption measurement configuration information; and
sending the network energy consumption measurement report based on the buffer threshold and buffer priority for the network energy consumption measurement report carried in the network energy consumption measurement configuration information.

15. The method according to claim 1, wherein before the network energy consumption measurement configuration information is acquired, the method further comprises:
sending measurement capability information, the measurement capability information being used to characterize a capability of the terminal to perform energy consumption measurement.

16. The method according to claim 15, wherein the measurement capability information is used to indicate at least one of the following:
whether energy consumption measurement is supported;
whether energy consumption measurement in a connected state or a non-connected state is supported;
whether transmission of the network energy consumption measurement report via SRB4 or SRB5 is supported;
whether energy consumption measurement for a service type is supported;
whether energy consumption measurement in a dual connectivity scenario is supported; or
whether segmented transmission of the network energy consumption measurement report is supported.

17. An energy consumption measurement method, applied to a base station, comprising:
sending network energy consumption measurement configuration information to a terminal; and
receiving a network energy consumption measurement report sent by the terminal, the network energy consumption measurement report being generated by the terminal based on the network energy consumption measurement configuration information.

18. The method according to claim 17, wherein the network energy consumption measurement configuration information includes at least one of: network energy consumption measurement reference information, a service type, an area scope, a network slice identifier, a protocol data unit (PDU) session identifier, a Quality of Service (QoS) flow, a stand-alone non-public network (SNPN) identifier, a public land mobile network identifier, a core network area identifier, an energy consumption measurement priority, an energy consumption threshold for energy consumption measurement, a target functional entity address, a measurement interval for energy consumption measurement, a measurement type of energy consumption measurement, a transmission period for the network energy consumption measurement report, a transmission trigger indication for the network energy consumption measurement report, a real-time transmission indication for the network energy consumption measurement report, a periodic transmission indication for the network energy consumption measurement report, a start indication for energy consumption measurement, a measurement time for energy consumption measurement, a pause indication for energy consumption measurement, a pause transmission indication for the network energy consumption measurement report, a buffer quantity indication for the network energy consumption measurement report, a segmented transmission indication for the network energy consumption measurement report, a buffer threshold for the network energy consumption measurement report, or a buffer priority for the network energy consumption measurement report.

19. The method according to claim 17, wherein the base station is a master node of the terminal, and before the network energy consumption measurement configuration information is sent to the terminal, the method further comprises:
receiving network energy consumption measurement configuration information sent by a higher-layer entity or a secondary node of the terminal.

20. The method according to claim 17, wherein the base station is a secondary node of the terminal, and before the network energy consumption measurement configuration information is sent to the terminal, the method further comprises:
receiving network energy consumption measurement configuration information sent by a higher-layer entity or a master node of the terminal.

21. The method according to claim 19 or 20, wherein the higher-layer entity includes any one of: an energy-saving entity, an energy consumption measurement entity, an operation administration and maintenance (OAM) network element, and an authentication management function (AMF) network element.

22. The method according to claim 17, further comprising:
sending the network energy consumption measurement configuration information to a target base station of the terminal in response to the base station being a source base station of the terminal.

23. An energy consumption measurement device, comprising a processor, wherein the processor, upon executing a computer program, performs the energy consumption measurement method according to any one of claims 1 to 16 or according to any one of claims 17 to 22.

24. A computer-readable storage medium, wherein the computer-readable storage medium comprises computer instructions, the computer instructions, upon being executed, perform the energy consumption measurement method according to any one of claims 1 to 16 or according to any one of claims 17 to 22.
